# EUROPÄISCHE PATENTANMELDUNG

(11) **EP 2 983 023 A1**
(43) Veröffentlichungstag der Anmeldung: **10.02.2016**
(21) Anmeldenummer: 15170949.0
(22) Anmeldetag: 08.06.2015
(51) Int. Cl.: G02B 6/28

(54) **OPTISCHER KOPPLER**

(30) Priorität: 05.08.2014 DE 102014111105
(71) Anmelder: Krohne Messtechnik GmbH, 47058 Duisburg (DE)
(72) Erfinder: Krisch, Henrik, 47809 Krefeld (DE)
(74) Vertreter: Gesthuysen Patent- und Rechtsanwälte

(57) **Zusammenfassung**

Beschrieben und dargestellt ist ein Optischer Koppler (1) zum Übersprechen von Leistungsanteilen eines ersten unbeschichteten Wellenleiters (2) in einen zweiten unbeschichteten Wellenleiter (3), mit mindestens vier beschichteten Wellenleitern (4) und mit mindestens einem äußeren Rohr (5), wobei die beschichteten Wellenleiter (4) mit jeweils einem Ende mit jeweils einem Ende der unbeschichteten Wellenleiter (2, 3) stirnseitig verbunden sind, wobei sich die unbeschichteten Wellenleiter (2, 3) innerhalb des äußeren Rohres (5) befinden und wobei die beschichteten Wellenleiter (4) an den Enden des äußeren Rohres (5) heraustreten.

Ein optischer Koppler dessen Messungenauigkeit besonders hoch ist und dessen Einsatz auch bei rauen Prozessbedingungen problemlos möglich ist, wird dadurch realisiert, dass die unbeschichteten Wellenleiter (2, 3) in einem inneren Rohr (6) angeordnet sind, dass das äußere Rohr (5) das innere Rohr (6) umgibt, wobei sich die Verbindungsstellen (7) der unbeschichteten Wellenleiter (2, 3) mit den beschichteten Wellenleitern (4) innerhalb des äußeren Rohres (5) befinden und dass das innere Rohr (6), die heraustretenden Enden der beschichteten Wellenleiter (4) an den Enden des äußeren Rohres (5) und das äußere Rohr (5) an einem Punkt (8) miteinander verbunden sind.

## Beschreibung

Die Erfindung betrifft einen optischen Koppler zum Übersprechen von Leistungsanteilen eines ersten unbeschichteten Wellenleiters in einen zweiten unbeschichteten Wellenleiter, mit mindestens vier beschichteten Wellenleitern und mit mindestens einem äußeren Rohr, wobei die beschichteten Wellenleiter mit jeweils einem Ende mit jeweils einem Ende der unbeschichteten Wellenleiter stirnseitig verbunden sind, wobei sich die unbeschichteten Wellenleiter innerhalb des äußeren Rohres befinden und wobei die beschichteten Wellenleiter an den Enden des äußeren Rohres heraustreten.

Bei der Anwendung von Wellenleitern z. B. in Interferometern werden Vorrichtungen benötigt, die es ermöglichen, ein in einen Wellenleiter eingekoppeltes Signal teilweise oder ganz auf einen anderen Wellenleiter zu überkoppeln oder in zwei verschiedenen Wellenleitern geführte elektromagnetische Wellen miteinander wechselwirken zu lassen. Dies kann zum Beispiel dadurch erfolgen, dass die Wellenleiterfasern entlang einer vorbestimmten Strecke nebeneinander, sich berührend oder sogar miteinander verschmolzen verlegt werden. Dieser Umstand wird unter anderem in der Messtechnik zur Erfassung von Längenänderungen, beispielsweise bei Interferometern, genutzt. Die bei einem Interferometer mit hoher Genauigkeit erfassbare Längenänderung bzw. Änderung einer Längendifferenz kann zur Ermittlung ganz unterschiedlicher abgeleiteter Messgrößen verwendet werden, z. B. von Drücken bzw. Druckdifferenzen, die eine Messmembran auslenken; davon abgeleitet werden könnte wieder eine Information zur Bestimmung eines Durchflusses usw.

Zur Druckmessung werden im Stand der Technik Wellenleiterfasern auf einer Messmembran angebracht, wobei die Wellenleiterfasern in ihrem Verlauf auf der Messmembran zumindest teilweise mit der Messmembran wirksam verbunden sind, so dass eine durch den Mediumdruck der Umgebung hervorgerufene Auslenkung der Messmembran in dem wirksam verbundenen Bereich zu einer Streckung und/oder Stauchung der Wellenleiterfasern führt. Durch die voneinander verschiedenen Weglängen, die ein Signal bei Stauchung und/oder Streckung in den Wellenleiterfasern zurücklegen muss, sind die Signale in den beiden Fasern phasenverschoben. Um eine Phasenverschiebung durch eine in den Signallauf der Messvorrichtung geschaltete Auswertevorrichtung zu detektieren, müssen die Signale aus den einzelnen Fasern überlagert werden. Die Überlagerung geschieht in optischen Kopplern, in denen ein Übersprechen von Leistungsanteilen der Wellenleiter realisiert werden kann. Ein solcher optischer Koppler muss bedingt durch die rauen Prozessbedingungen, denen ein Messgerät ausgesetzt ist, robust ausgestaltet sein.

Der Anmelderin sind aus der Praxis optische Koppler mit mindestens zwei temperaturstabil beschichteten Wellenleitern bekannt, bei denen die Beschichtung für eine definierte Weglänge entfernt wird, um ein Übersprechen der in den Wellenleitern geführten elektromagnetischen Wellen zu ermöglichen. Um diesen Effekt zu erhöhen sind die Wellenleiter miteinander verwunden und/oder bereichsweise sogar miteinander verschmolzen. Der ungeschützte, unbeschichtete Teil der Wellenleiter ist von einem Glasrohr umgeben, welches den unbeschichteten Teil vor äußeren Einflüssen schützen soll. Die aus dem Stand der Technik bekannten optischen Koppler weisen jedoch den Nachteil auf, dass relative Bewegungen der Wellenleiterfasern zueinander und/ oder Bewegungen als Verbund bereits zu erheblichen Messungenauigkeiten führen können, da ein unbeabsichtigtes Anregen gleicherweise zu einer Stauchung und/ oder Verlängerung der Fasern führen kann, was sich in einer größeren, detektierten Phasenverschiebung widerspiegelt, als durch die Messgröße eigentlich hervorgerufen wird.

Der Erfindung liegt daher die Aufgabe zugrunde, einen optischen Koppler anzugeben, bei dem die oben aufgeführten Probleme der Messungenauigkeiten, die durch einen optischen Koppler hervorgerufen werden können, zumindest teilweise behoben werden, sodass ein Einsatz auch bei rauen Prozessbedingungen problemlos möglich ist.

Die zuvor hergeleitete Aufgabe ist bei einem gattungsgemäßen optischen Koppler dadurch gelöst, dass die unbeschichteten Wellenleiter in einem inneren Rohr angeordnet sind, dass das äußere Rohr das innere Rohr umgibt, wobei sich die Verbindungsstellen der unbeschichteten Wellenleiter mit den beschichteten Wellenleitern innerhalb des äußeren Rohres befinden, und dass das innere Rohr, die heraustretenden Enden der beschichteten Wellenleiter an den Enden des äußeren Rohres und das äußere Rohr an einem Punkt miteinander verbunden sind.

Bei dem erfindungsgemäßen optischen Koppler bewirkt die starre Verbindung von drei Elementen, nämlich den Wellenleitern, dem inneren Rohr und dem äußeren Rohr, dass Bewegungen der Lichtkopplungselemente innerhalb des äußeren Rohres eliminiert werden. Somit wird die Vibrationsempfindlichkeit des optischen Kopplers und Messungenauigkeiten, die generell durch äußere Einflüsse hervorgerufen werden, minimiert.

Außerdem werden die Verbindungsstellen der unbeschichteten Wellenleiter mit den beschichteten Wellenleitern dahingehend geschützt, dass sie sich zum einen innerhalb des inneren Rohres und innerhalb des äußeren Rohres befinden und sie zum anderen gegen Zug- oder Druckbeanspruchung geschützt sind, da sich die Verbindungspunkte der beschichteten Wellenleiter mit den unbeschichteten Wellenleitern zwischen den Verbindungspunkten von beschichteten Wellenleitern, innerem Rohr und äußerem Rohr befindet und die starre Verbindung eine Bewegung der Wellenleiter innerhalb des äußeren Rohres verhindert. Die Rohr-in-Rohr-Anordnung ist besonders vorteilhaft zur Unterdrückung von axialen Streckungen/Stauchungen des Kopplers, unabhängig davon, ob diese durch externe Kraftbeaufschlagung oder inhärent durch thermische Längenausdehnung verursacht werden.

Eine Ausgestaltung der vorliegenden Erfindung sieht vor, dass das innere Rohr in Längsrichtung zu einer Rinne geöffnet ist. Wenn es heißt, dass das innere Rohr in Längsrichtung zu einer Rinne geöffnet ist, bedeutet dies, dass das innere Rohr eine geöffnete U-Form aufweist, sodass zu den eingangsseitigen und ausgangsseitigen Öffnungen eine weitere Öffnung in Längsrichtung vorgesehen ist. Die Ausgestaltung ist nicht auf eine U-Form beschränkt. Denkbar wäre auch eine Quaderform mit einer Grundseite und zwei nach oben gebogenen Seiten, ein geschlossener Kanal mit Öffnungen an einer Längsseite, oder jede andere Form die den Wellenleitern als Behältnis und Führungsstruktur dienen kann.

In einer weiteren Ausgestaltung der Erfindung weisen die Wellenleiter, das innere Rohr und das äußere Rohr in etwa den gleichen Wärmeausdehnungskoeffizienten auf. Somit werden Bewegungen, die durch Wärmeausdehnung induziert werden, vom gesamten Bauteil - dem optischen Koppler - vollzogen. Relative Bewegungen zueinander, insbesondere in axialer Richtung, können dadurch größtenteils vermieden werden und temperaturabhängige Stauchungen und/oder Streckungen der Wellenleiter aufgrund dieser Bewegungen fallen nicht ins Gewicht. Gerade bei Prozessen mit hohen Temperaturen und Drücken können plötzliche Temperaturänderungen die einzelnen Elemente stark beanspruchen. Agieren die Elemente jedoch als Einheit, ist der optische Koppler deutlich robuster gegenüber den Prozessbedingungen ausgebildet, vor allem aber bleibt die Messgenauigkeit auf langer Sicht konstant gut.

Die Verbindung zwischen den unbeschichteten Wellenleitern und den beschichteten Wellenleitern ist in einer bevorzugten Ausgestaltung des erfindungsgemäßen optischen Kopplers durch eine gängige Spleißverbindung realisiert. Jede andere Methode zur Verbindung von Wellenleitern ist selbstverständlich auch denkbar. Beispielsweise können die Fasern durch ein weiteres Bauteil miteinander gekoppelt sein.

Eine weitere Ausgestaltung der Erfindung sieht vor, dass die Verbindung des äußeren Rohres mit dem inneren Rohr und den Enden der beschichteten Wellenleiter eine keramische Verbindung vom Typ High-Temp-Ceramic-Adhesive ist. Dieser Verbindungstyp eignet sich besonders bei hohen Temperaturen und rauen Prozessbedingungen, da er temperaturbeständig als auch korrosionsunempfindlich ist. Durch eine solche Verbindung ist der Innenraum des Kopplers gut gegen den Außenraum des Kopplers gedichtet, insbesondere kann Feuchtigkeit in den Koppler praktisch nicht eindringen.

In einer bevorzugten Ausgestaltung der Erfindung erstreckt sich das innere Rohr in seiner Längserstreckung bis in etwa zu den Enden des äußeren Rohres. Auf diese Weise kann die Verbindung der drei zu verbindenden Teile, also die Verbindung von Wellenleiter, dem inneren Rohr und dem äußeren Rohr, am einfachsten realisiert werden, da sich ein möglicher Verbindungspunkt somit in etwa an den Enden des äußeren Rohres befindet. Eine geringere Dimensionierung des inneren Rohres ist ebenfalls möglich. Die Verbindungsstelle der drei Elemente liegt dann lediglich innerhalb des äußeren Rohres.

Eine weitere Ausgestaltung der Erfindung sieht vor, dass das äußere Rohr hermetisch verschlossen ist. Ein Verschließen des äußeren Rohres erhöht die Schutzfunktion, da kein Stofftransport aus den Prozessmedien, in denen sich der optische Koppler unter Umständen befinden kann, in das äußere Rohr stattfindet und somit keine korrosiven Medien zu den unbeschichteten Wellenleitern gelangen können. Der hermetische Verschluss kann dabei durch die High-Temp-Ceramic-Adhesive-Verbindung realisiert werden, es ist aber genauso gut möglich, dass eine weitere Komponente das äußere Rohr versiegelt, während der starre Verbindungspunkt innerhalb des äußeren Rohres angeordnet ist. In jedem Fall sollte das Medium zur Versiegelung des äußeren Rohres korrosions- und temperaturbeständig sein, um den optischen Koppler gegen extremere Prozessbedingungen zu schützen. Zusätzlich kann der Zwischenraum zwischen äußerem Rohr und innerem Rohr mit einem Füllstoff verfüllt werden, der zum einen mechanische Stabilität bietet, als auch den optischen Koppler weiter gegen äußere Einflüsse schützt. Denkbar wären beispielsweise Polymergemische, die auch einen ähnlichen Wärmeausdehnungskoeffizienten aufweisen, wie die restlichen Elemente des erfindungsgemäßen optischen Kopplers.

In einer weiteren Ausgestaltung der Erfindung sind die beschichteten Wellenleiter metallisiert, vorzugsweise mit Kupfer beschichtet. Für einen hohen Grad an Temperaturbeständigkeit müssen die Wellenleiter, die sich außerhalb des äußeren Rohres befinden, beschichtet sein. Eine Metallisierung bietet sich an, da die Eigenschaften eines metallisierten Wellenleiters den Anforderungen des optischen Kopplers gerecht werden. Die Metallisierung kann neben Kupfer auch aus mit einem anderen Metall verwirklicht werden. Für die Funktionsweise des optischen Kopplers ist es nicht zwingend notwendig, eine Metallisierung als Beschichtung vorzusehen. Eine Kunststoffbeschichtung, die von den Prozessmedien nicht angegriffen wird, wäre ebenfalls denkbar, solange die Wärmeausdehnungskoeffizienten durch die Beschichtung nicht dahingehend beeinflusst werden, dass eine zu große Differenz zwischen dem Wärmeausdehnungskoeffizienten der beschichteten Wellenleiter - und der unbeschichteten Wellenleiter - sowie dem Wärmeausdehnungskoeffizienten des inneren Rohres und des äußeren Rohres aufkommt.

Die Erfindung betrifft außerdem ein Mach-Zehnder-Interferometer mit mindestens einem optischen Koppler, wobei der optische Koppler nach mindestens einem Merkmal des zuvor beschriebenen optischen Kopplers ausgestaltet ist.

In einer Ausgestaltung des erfindungsgemäßen Mach-Zehnder-Interferometers werden zwei optische Koppler verwendet. Die beiden optischen Koppler sind über mindestens zwei - vorzugsweise unterschiedlich lange -, beschichtete Wellenleiter miteinander verbunden. Dabei sind die ausgangsseitigen beschichteten Wellenleiter des ersten optischen Kopplers gleichzeitig die eingangsseitigen beschichteten Wellenleiter des zweiten optischen Kopplers. In einer bevorzugten Ausgestaltung sind die optischen Koppler insoweit parallel zueinander angeordnet, dass die sie verbindenden beschichteten Wellenleiter eine Schlaufe bilden, die auf einer Membran anbringbar ist. Durch die unterschiedlichen Längen der Wellenleiter beschreiben die auf der Membran anbringbaren Teile der Wellenleiter unterschiedlich große Schlaufen. Wird die Membran durch den Einfluss der zu messenden Größe in Schwingungen versetzt, werden die Wellenleiter gestaucht und/ oder gestreckt. Dadurch müssen die Signale eine veränderte Weglänge bzw. eine veränderte Weglängendifferenz durchlaufen und die Signale übersprechen phasenversetzt im optischen Koppler. Das Maß der Versetzung bzw. das Maß der durch Wechselwirkung und Interferenz bewirkten Intensitätsänderung der Signale, die im Anschluss an die optischen Koppler eine Auswertevorrichtung durchlaufen, ist dann als Maß für die zu messende Größe zu betrachten. Um eine möglichst genaue Messung zu erhalten, wird ein optischer Koppler vor die Membran geschaltet, damit keine Schwingungen, Vibrationen oder ähnliche Störeinflüsse die Weglänge der Signale zusätzlich verfälschen, die sich dann nach Durchlaufen der Schlaufe, nach dem zweiten optischen Koppler, als einzelnes auswertbares Signal abgreifen lassen.

Im Einzelnen gibt es nun eine Vielzahl von Möglichkeiten, den erfindungsgemäßen optischen Koppler und das Mach-Zehnder-Interferometer auszugestalten und weiterzubilden. Dazu wird verwiesen sowohl auf die dem Patentanspruch 1 nachgeordneten Patentansprüche und den nebengeordneten Patentanspruch 9 als auch auf die nachfolgende Beschreibung von bevorzugten Ausführungsbeispielen in Verbindung mit der Zeichnung. In der Zeichnung zeigen:
- Fig. 1: ein Ausführungsbeispiel eines optischen Kopplers in einer Draufsicht im Schnitt,
- Fig. 2: ein Ausführungsbeispiel eines optischen Kopplers gemäß Fig. 1 in einer perspektivischen Ansicht und
- Fig. 3: ein Ausführungsbeispiel eines Mach-Zehnder-Interferometers in einer Draufsicht im Schnitt.

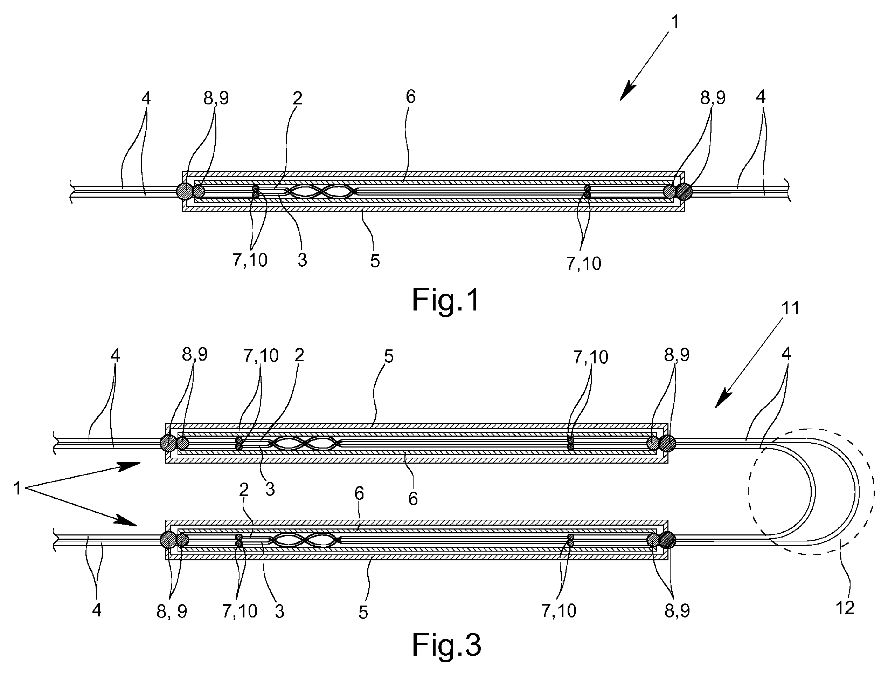

Fig. 1 zeigt ein erfindungsgemäßes Ausführungsbeispiel eines optischen Kopplers 1 wie er beispielsweise in einem Mach-Zehnder-Interferometer verwendet werden kann. In diesem Ausführungsbeispiel sind zwei unbeschichtete Wellenleiter 2, 3 verbaut, die ein gegenseitiges Übersprechen von Leistungsanteilen ermöglichen. Die Wellenleiter 2, 3 werden auch als Lichtleiter bezeichnet und sind hier als Glasfasern ausgestaltet. Die beiden unbeschichteten Wellenleiter 2, 3 sind an den Enden jeweils mit zwei beschichteten Licht- bzw. Wellenleitern 4 verbunden. Die unbeschichteten Wellenleiter 4 werden von einem äußeren Rohr 5 umgeben, das in diesem Ausführungsbeispiel durch eine Glaskapillare gebildet wird, und die Enden der beschichteten Wellenleiter 4 treten an den Stirnseiten der Glaskapillare 5 heraus.

Zusätzlich befinden sich die unbeschichteten Wellenleiter 2, 3 vollständig in einem inneren Rohr 6, das ebenfalls von dem äußeren Rohr 5 umhüllt wird. Die Längserstreckung des inneren Rohres 6 ist so gewählt, dass die Enden des inneren Rohres 6 in etwa bis zu den Enden der Glaskapillare 5 reichen. Der optische Koppler 1 hat im vorliegenden Beispiel insgesamt eine Längserstreckung von etwa 5 cm und er weist einen Durchmesser von etwa 3,5 mm auf. Die Verbindungsstellen 7 der unbeschichteten Wellenleiter 2, 3 und der beschichteten Wellenleiter 4 befinden sich innerhalb des inneren Rohres 6 und somit auch innerhalb des äußeren Rohres 5. Zum Schutz vor äußeren Einflüssen ist das äußere Rohr 5 hermetisch verschlossen.

Um ein hohes Maß an Steifigkeit zu erreichen und somit äußere Störeinflüsse durch beispielsweise Vibration, Stauchung und/oder Zugbelastungzu minimieren, sind die beschichteten Wellenleiter 4, das äußere Rohr 5 und das innere Rohr 6 an einem Punkt 8 gemeinsam miteinander verbunden. In diesem Ausführungsbeispiel wird die Verbindung 8 durch eine High-Temp-Ceramic-Adhesive-Verbindung 9 realisiert, die auch gleichzeitig dazu dient, das äußere Rohr 5 zu verschließen und den optischen Koppler vor äußeren Einflüssen zu schützen. Dabei werden zwei unterschiedliche Ceramic-Adhesive-Verbindungen verwendet. Zum Versiegeln und Verbinden der beschichteten Wellenleiter 4 innerhalb des Schutzrohrsystems bedient man sich eines Resbond 940-LE Ceramic Adhesives und für die Versiegelung außerhalb des äußeren Rohrs 5 und der Verbindung mit den beschichteten Wellenleitern 4 einer Verbindung vom Typ Ceramabond 571. Die Verbindungsstellen sind zusätzlich mit Silikon überzogen, damit der Gefahr vorgebeugt wird, dass einer der beschichteten Wellenleiter 4 unmittelbar an der Kante der Verbindung bricht.

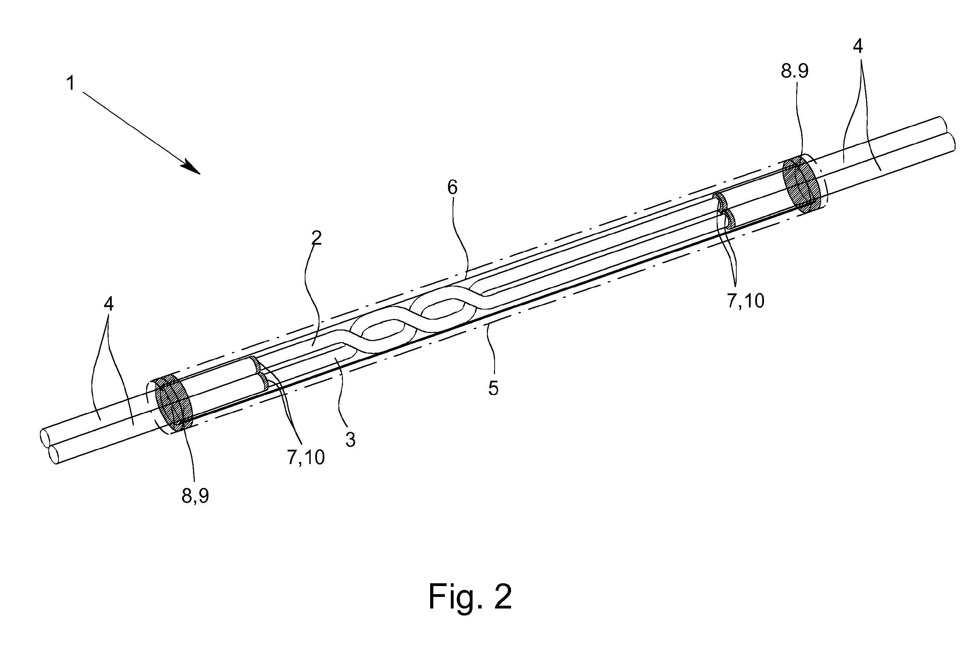

Fig. 2 zeigt ein Ausführungsbeispiel gemäß Fig. 1 in einer perspektivischen Darstellung. Das innere Rohr 6 ist U-förmig, wie eine Rinne, ausgestaltet, das heißt zusätzlich zu den Öffnungen an den Stirnseiten ist das innere Rohr 6 in Längsrichtung ebenfalls geöffnet. Der Strang der verbundenen Wellenleiter 2, 3 und 4 liegt innerhalb der U-förmigen Ausgestaltung. Die Verbindungsstellen 7 der beschichteten Wellenleiter 4 und der unbeschichteten Wellenleiter 2, 3 befinden sich ebenfalls innerhalb des nach oben geöffneten Behältnisses, welches durch das innere Rohr 6 gebildet wird.

Die Verbindung der Wellenleiter 2, 3, 4 untereinander ist durch eine Spleißverbindung 10 realisiert. Durch diese geschützte Anordnung treten lediglich die beschichteten Wellenleiter 4 aus der schützenden Glaskapillare 5 heraus. Die Beschichtung ist so ausgewählt, dass sie rauen Prozessbedingungen standhalten kann. In diesem Ausführungsbeispiel sind die beschichteten Wellenleiter 4 metallisiert, das heißt sie sind mit einer Kupferschicht überzogen. Die beschichteten Wellenleiter 4 sind vom Typ Optacore Cu800 und zusätzlich zur Kupferbeschichtung mit einer Nickelschicht überzogen. Die unbeschichteten Wellenleiter 2, 3 sind in der geschützten Umgebung innerhalb des inneren Rohres 6 und des äußeren Rohres 5 angeordnet. Eine zusätzliche Beschichtung wird daher nicht benötigt.

Da unter rauen Prozessbedingungen vor allem hohe Temperaturen als auch hohe Drücke fallen, sind die Wellenleiter 2, 3 und 4, sowie das innere Rohr 6 als auch das äußere Rohr 5 vom Material her so gewählt, dass sie in etwa den gleichen Wärmeausdehnungskoeffizienten aufweisen. Eine solche Ausgestaltung trägt weiterhin dazu bei, dass mögliche Verschiebungen oder Stauchungen der Wellenleiter 2, 3, aufgrund der relativen Bewegungen der unterschiedlichen Bauteile zueinander, weitestgehend minimiert werden. Längenänderungen bei plötzlichen Temperaturerhöhungen können so einheitlich von dem optischen Koppler 1 vollzogen werden, sodass eine höhere Genauigkeit bei Interferenzmessungen erzielt werden kann. Auch ist die mechanische Belastung der Wellenleiter 2, 3 und 4 reduziert, auf die Wellenleiter ganz allgemein sehr empfindlich reagieren.

Fig. 3 zeigt einen Teil eines Mach-Zehnder-Interferometers 11 mit zwei optischen Kopplern 1 gemäß den Ausführungsbeispielen aus Fig. 1 und Fig. 2. Zwei beschichtete Wellenleiter 4 unterschiedlicher Länge sind mit ihren beiden Enden jeweils mit einem optischen Koppler 1 verbunden, sodass die beiden Enden als heraustretende Enden der beschichteten Wellenleiter 4 aus einem optischen Koppler 1 fungieren. Daraus ergibt sich die Kombination, dass zwei optische Koppler 1 über zwei beschichtete Wellenleiter 4 miteinander verbunden sind. Die beiden optischen Koppler 1 sind derart parallel zueinander angeordnet, dass die beiden beschichteten Wellenleiter 4 unterschiedlicher Länge zu einer Schlaufe gebogen sind. Diese Schlaufe ist auf einer Membran 12 angebracht, hier der Membran eines Druckmessgeräts. Im Falle, dass die Membran 12 zu Schwingungen angeregt wird, werden die beiden beschichteten Wellenleiter 4 aufgrund ihrer unterschiedlichen Längen verschieden voneinander gestaucht oder gelängt, sodass die in den Wellenleitern 4 geführten Wellen eine unterschiedliche Weglänge zurücklegen müssen und die Wellen dadurch eine veränderliche Phasenverschiebung aufweisen. Durch den vorgeschalteten ersten optischen Koppler 1 werden Störeinflüsse minimiert, die zu einer Stauchung der Wellenleiter 2, 3 und 4 beitragen kann. Der zweite optische Koppler 1 wird dazu verwendet, die beiden phasenverschobenen Leistungsanteile der einzelnen Wellenleiter zusammenzuführen, das heißt im optischen Koppler 1 findet ein Übersprechen und eine Wechselwirkung der Signale statt. Eine Änderung der Signalintensität ist dann ein Maß für die zu messende Größe. Die Länge des kürzeren beschichteten Wellenleiters 4, der auf der Membran angeordnet ist beträgt vom ersten optischen Koppler 1 zum zweiten optischen Koppler 1 etwa 122 mm, die des zweiten beschichteten Wellenleiters 4 etwa 129 mm, wobei der Längenunterschied in etwa zwischen 6 bis 7 mm liegt. Die Membran weist einen Durchmesser von ca. 8 mm auf. Für die weitere Verbindung des Interferometers mit einer Auswertevorrichtung sind beschichtete Wellenleiter nicht zwingend notwendig, da diese nicht weiter den Prozessbedingungen ausgesetzt werden. Die hier verwendeten Wellenleiter sind vom Typ Nufern 780-HP. Auch diese Wellenleiter 4 sind mit einer Spleißverbindung 7, 10 mit den beschichteten Wellenleitern 4 verbunden. Da diese keinen höheren Ansprüchen bezüglich Temperaturunemfindlichkeit oder Druckbeständigkeit aufweisen müssen, ist diese Spleißverbindung ungeschützt ausgestaltet.

## Patentansprüche

1. Optischer Koppler (1) zum Übersprechen von Leistungsanteilen eines ersten unbeschichteten Wellenleiters (2) in einen zweiten unbeschichteten Wellenleiter (3), mit mindestens vier beschichteten Wellenleitern (4) und mit mindestens einem äußeren Rohr (5), wobei die beschichteten Wellenleiter (4) mit jeweils einem Ende mit jeweils einem Ende der unbeschichteten Wellenleiter (2, 3) stirnseitig verbunden sind, wobei sich die unbeschichteten Wellenleiter (2, 3) innerhalb des äußeren Rohres (5) befinden und wobei die beschichteten Wellenleiter (4) an den Enden des äußeren Rohres (5) heraustreten,
**dadurch gekennzeichnet,**
**dass** die unbeschichteten Wellenleiter (2, 3) in einem inneren Rohr (6) angeordnet sind, dass das äußere Rohr (5) das innere Rohr (6) umgibt, wobei sich die Verbindungsstellen (7) der unbeschichteten Wellenleiter (2, 3) mit den beschichteten Wellenleitern (4) innerhalb des äußeren Rohres (5) befinden und dass das innere Rohr (6), die heraustretenden Enden der beschichteten Wellenleiter (4) an den Enden des äußeren Rohres (5) und das äußere Rohr (5) an einem Punkt (8) miteinander verbunden sind.

2. Optischer Koppler (1) nach Anspruch 1, **dadurch gekennzeichnet, dass** das innere Rohr (6) in Längsrichtung zu einer Rinne geöffnet ist.

3. Optischer Koppler (1) nach Anspruch 1 oder 2, **dadurch gekennzeichnet, dass** die Verbindung des äußeren Rohres (5) mit dem inneren Rohr (6) und den Enden der beschichteten Wellenleiter (4) eine High-Temp-Ceramic-Adhesive-Verbindung (9) ist.

4. Optischer Koppler (1) nach einem der Ansprüche 1 bis 3, **dadurch gekennzeichnet, dass** die Wellenleiter (2, 3, 4), das innere Rohr (6) und das äußere Rohr (5) in etwa den gleichen Wärmeausdehnungskoeffizienten aufweisen.

5. Optischer Koppler (1) nach einem der Ansprüche 1 bis 4, **dadurch gekennzeichnet, dass** die Verbindung der unbeschichteten Wellenleiter (2, 3) mit den beschichteten Wellenleitern (4) eine Spleißverbindung (10) ist.

6. Optischer Koppler (1) nach einem der Ansprüche 1 bis 5, **dadurch gekennzeichnet, dass** sich das innere Rohr (6) in seiner Längserstreckung bis in etwa zu den Enden des äußeren Rohres (5) erstreckt.

7. Optischer Koppler (1) nach Anspruch 6, **dadurch gekennzeichnet, dass** das äußere Rohr (5) hermetisch verschlossen ist.

8. Optischer Koppler (1) nach einem der Ansprüche 1 bis 7, **dadurch gekennzeichnet, dass** die beschichteten Wellenleiter (4) metallisiert sind und vorzugsweise die Metallisierung aus Kupfer besteht.

9. Mach-Zehnder-Interferometer (11) mit mindestens einem optischen Koppler (1), wobei der optische Koppler (1) nach einem der Ansprüche 1 bis 8 ausgestaltet ist.
